# EUROPÄISCHE PATENTSCHRIFT

(11) **EP 2 404 748 B1**
(45) Veröffentlichungstag und Bekanntmachung des Hinweises auf die Patenterteilung: **03.07.2013**
(21) Anmeldenummer: 11005182.8
(22) Anmeldetag: 27.06.2011
(51) Int. Cl.: B32B 5/02, B32B 25/00, B61D 17/22, F16J 3/04

(54) **Materialbahn eines Balges eines Übergangs sowie Verfahren zur Herstellung einer solchen Materialbahn**
Sheet material for making bellows for connecting vehicle compartments and process for making that material
Matériau pour soufflet d'intercommunication reliant deux compartiments d'un véhicule ainsi que son procédé de fabrication

(30) Priorität: 05.07.2010 DE 102010026115
(43) Veröffentlichungstag der Anmeldung: 11.01.2012
(73) Patentinhaber: Hübner GmbH, 34123 Kassel (DE)
(72) Erfinder: Hübner, Reinhard, 34130 Kassel (DE); Jünke, Volker, 34587 Felsberg (DE); Schmaler, Kirsten, 01945 Tettau (DE); Werner, Uwe, 01979 Lauchhammer (DE)
(74) Vertreter: Walther, Walther & Hinz GbR

(56) Entgegenhaltungen:
- EP-A2- 2 147 780
- FR-A1- 2 939 155

## Beschreibung

Die Erfindung betrifft einen Balg eines Übergangs zwischen zwei gelenkig miteinander verbundenen Fahrzeugen oder Balg einer Fluggastbrücke oder Fluggasttreppe, wobei der Balg mindestens eine Materialbahn mit mindestens einem Festigkeitsträger aufweist, wobei der Festigkeitsträger beidseitig mit einer Kunststoffschicht beschichtet ist.

Bälge sind allerdings auch in der Form von z. B. Turboladerschläuchen bekannt (EP 2147780 A2). Aus Temperaturgründen kann hierbei die innere auf einem Festigkeitsträger angeordnete Schicht aus einem Fluorsilikon oder einem Fluorkarbonkautschuk und die äußere Schicht aus einem Silikonkautschuk, einem ACM oder einem AEM ausgebildet sein.

Bälge sind als Wellen- oder Faltenbälge bekannt. Sie werden auch eingesetzt als Teil eines Übergangs zwischen zwei gelenkig miteinander verbundenen Fahrzeugen und umgeben hierbei die Übergangsbrücke tunnelartig. Gleichfalls sind Bälge bei Fluggastbrücken oder auch Fluggasttreppen bekannt.

Bei Wellen- oder auch Faltenbälgen setzen sich die einzelnen Falten oder Wellen aus Materialbahnen zusammen, wobei im Übergang von einer jeden Falte oder Welle zu einer benachbarten Falte oder Welle die einzelnen Materialbahnen zur Bildung des Falten- oder Wellenbalges miteinander, insbesondere auch durch Balgrahmen, in Verbindung stehen, wie dies an sich aus dem Stand der Technik auch hinreichend bekannt ist. Insbesondere bei einem Faltenbalg ist es hierbei so, dass die Balgrahmen lediglich auf der außen liegenden Seite des Balges zum Erfassen des Übergangs zwischen zwei Falten vorgesehen sind.

Die Materialbahn eines solchen Balges umfasst mindestens einen Festigkeitsträger, beispielsweise in Form eines Gewebes, eines Gewirkes, Geleges oder eines Gestricks, wobei dieser Festigkeitsträger üblicherweise zu beiden Seiten beschichtet ist. Für die Beschichtung kommen die unterschiedlichsten Kautschuke oder Kautschukmischungen in Frage, so u. a. Elastomere in Form von vulkanisierten Silikonkautschuken oder organischen Kautschuken, wie z. B. CSM (chlorsulfoniertes Polyethylen). Der Vorteil der Verwendung von einem Elastomer auf Basis eines Silikonkautschuks zur Beschichtung von Festigkeitsträgern zur Herstellung von Bälgen, beispielsweise im Schienenverkehr, besteht zum einen in der hohen Flammfestigkeit von Silikon, der guten Einfärbbarkeit und der erhöhten Kälteflexibilität. Nachteilig an der Verwendung von Silikonkautschuken ist der hohe Preis.

Darüber hinaus gibt es aber auch Bälge aus einem mit einem organischen Elastomer beschichteten Gewebe, z. B. einem CSM, wobei organische Elastomere preisgünstiger sind als Silikonelastomere. Ein beispielsweise mit einem CSM-Elastomer beschichtetes Gewebe ist nicht ganz so flexibel, wie ein mit einem Silikonelastomer beschichtetes Gewebe, und es lässt sich darüber hinaus nicht in allen Farben herstellen. So ist insbesondere die Herstellung einer Beschichtung mit einem reinweißen CSM nicht möglich. Dies deshalb, weil ein solches CSM in seiner Grundsubstanz bereits nicht weiß ist und darüber hinaus bei Sonneneinstrahlung, wenn auch langsam, so jedoch die Farbe ändert. In Bezug auf die Flammfestigkeit müssen besondere Maßnahmen getroffen werden, um ein solches mit CSM beschichtetes Gewebe flammfest zu gestalten.

Ein mit einem vulkanisierten Silikonkautschuk beschichtetes Gewebe kann dagegen nicht nur flammfest eingestellt werden, sondern ist auch bei höheren Temperaturen stabil.

In diesem Zusammenhang ist zu bemerken, dass die Flammfestigkeit und die Farbechtheit auf der Außenseite eines Balges von Relevanz sind. Dies deshalb, weil diese Seite des Balges Witterungseinflüssen ausgesetzt ist, und es sich darüber hinaus auch als Vorteil herausgestellt hat, wenn die farbliche Gestaltung genau auf die Farbe z. B. des Wagenkastens abgestimmt werden kann.

Die Kombination der Vorteile eines mit einem Silikonelastomer beschichteten Festigkeitsträgers mit der Preiswürdigkeit eines aus einem organischen Elastomer beschichteten Festigkeitsträgers, z. B. eines Gewebes zur Herstellung der Materialbahn für einen Balg, ist das Ziel der vorliegenden Erfindung.

In diesem Zusammenhang wird erfindungsgemäß bei einer Materialbahn eines Balges der eingangs genannten Art vorgeschlagen, dass der mindestens eine Festigkeitsträger auf der einen Seite eine Beschichtung auf Basis eines Silikonkautschuks und auf der anderen Seite eine Beschichtung auf Basis eines organischen Kautschuks aufweist. Silikonkautschuke unterscheiden sich von den organischen Kautschuken dadurch, das die Hauptkette nicht aus Kohlenstoffverbindungen aufgebaut ist, sondern aus alternierenden Silizium- und Sauerstoffatomen besteht. Die Verwendung der Kautschuke erfolgt als unverschnittene Kautschukkomponente oder als Kautschukkomponentenverschnitt unter Beigabe üblicher Mischungsingredienzien, insbesondere zur Vulkanisation. Nach Aufbringen der Beschichtung erfolgt die Vulkanisation zu dem jeweiligen Elastomer, wobei der Vorgang der Vulkanisation durch in den Mischungsingredienzien vorhandene handelsübliche Vernetzungsmittel gegebenenfalls bei erhöhter Temperatur erfolgt. Das heißt, es werden zwei Mischungen mit unterschiedlichen und normalerweise nicht kompatiblen Vernetzungssystemen auf einen Festigkeitsträger aufgebracht. Der Festigkeitsträger kann hierbei als Gewebe, Gestrick, Gelege oder Gewirk ausgebildet sein. Insbesondere dann, wenn sich die Beschichtung mit einem Silikonelastomer auf der Außenseite des Balges befindet, werden die Vorteile verwirklicht, die auch ein insgesamt mit einem Silikonelastomer beschichteter Balg aufweist. Ein solcher Balg ist flammenhemmend, was insbesondere auf der Außenseite des Balges von hoher Wichtigkeit ist, da sich herausgestellt hat, dass in der Mehrzahl der Fälle die Gefahr des Brandes eines Balges von äußeren Einflüssen ausgeht. So wird auch die Brandschutzprüfung derart vorgenommen, dass das Balg von außen unter Hitzeeinwirkung gesetzt wird. Es ist unmittelbar einsichtig, dass hierbei ein Balg, dessen Festigkeitsträger auf der Außenseite mit einem Silikonelastomer beschichtet ist, insofern höhere Anforderungen an die Brandbeständigkeit erfüllt. Auch ist ein solcher Balg witterungsbeständig, insbesondere behält er seine Farbgebung bei, d. h. er vergilbt insbesondere nicht, und er ist über einen hohen Temperaturbereich kälteelastisch. Auf der Innenseite des Balges hingegen ist eine Beschichtung mit einem organischen Elastomer, z. B. einem CSM, vorgesehen, die den dort herrschenden Anforderungen durchaus genügt.

Sowohl eine Beschichtung auf Basis eines Silikonkautschuks, als auch eine Beschichtung auf Basis eines organischen Kautschuks müssen jeweils zu einem Elastomer ausvulkanisiert werden. Bislang ist die Fachwelt davon ausgegangen, dass aufgrund der unterschiedlichen Vulkanisationsbedingungen und Bestandteile von Beschichtungen auf Basis von Silikonkautschuken einerseits und Beschichtungen auf Basis von organischen Kautschuken andererseits sich die Verwendung zweier derart unterschiedlicher Beschichtungen auf einem Festigkeitsträger, z. B. einem Gewebe, verbietet.

Es hat sich allerdings überraschend herausgestellt, dass eine Beschichtung eines Festigkeitsträgers auf der einen Seite mit einem Silikonelastomer und auf der anderen Seite mit einem organischen Elastomer, beispielsweise einem CSM, dann möglich ist, wenn zunächst die Silikonkomponente auf den Festigkeitsträger aufgebracht wird, die Beschichtung auf Basis eines Silikonkautschuks ausvulkanisiert wird, und danach die Beschichtung auf Basis eines organischen Kautschuks, insbesondere einem CSM, auf-den Festigkeitsträger aufgebracht wird, und darauf folgend diese Schicht ausvulkanisiert wird.

Nach der Vulkanisation der Schichten zu jeweils einem Elastomer auf dem mindestens einen Festigkeitsträger, werden die einzelnen Materialbahnen zur Bildung der entsprechenden Wellen oder Falten eines Falten- oder Wellenbalges miteinander verbunden, wobei im Übergangsbereich einer Falte oder Welle zur jeweils benachbarten Falte oder Welle ein umlaufender Balgrahmen vorgesehen ist. Der Balgrahmen ist im Querschnitt U-förmig ausgebildet und erfasst die beiden Enden zweier benachbarter Wellen oder Falten.

Es wurde bereits darauf hingewiesen, dass die Beschichtung des Balges auf Basis eines Silikonkautschuks fahrzeugseitig nach außen zeigt, wohingegen die Beschichtung auf Basis eines organischen Kautschuks nach innen zeigt. Der Vorteil liegt insbesondere in der hohen Flammfestigkeit des Silikonwerkstoffs, wenn man davon ausgeht, dass die Flammfestigkeit auf der Außenseite des Balges gegeben sein soll. Von der Erfindung ebenfalls umfasst ist eine Konstruktion eines Übergangs mit zwei ineinander gelagerten Bälgen, z. B. in Form eines Doppelwellenbalges als Teil eines Übergangs zwischen den Stirnseiten zweier gelenkig miteinander verbundener Fahrzeuge. Bei einer solchen Doppelbalgkonstruktion ist vorgesehen, dass die Beschichtungen der beiden Bälge auf Basis eines organischen Kautschuks auf den einander zuweisenden Seiten der Bälge angeordnet sind, wobei entsprechend die Beschichtung auf Basis eines Silikonkautschuks auf dem äußeren Balg nach außen zeigt, und die entsprechende Beschichtung auf dem inneren Balg der Innenseite des inneren Balges zugeordnet ist.

Anhand der Zeichnungen wird die Erfindung beispielhaft näher erläutert.
- Fig. 1: zeigt schematisch die beiden Wagenkästen eines Gelenkfahrzeugs mit einem Balg;
- Fig. 2: zeigt schematisch den erfindungsgemäßen Aufbau einer Materialbahn im Schnitt.

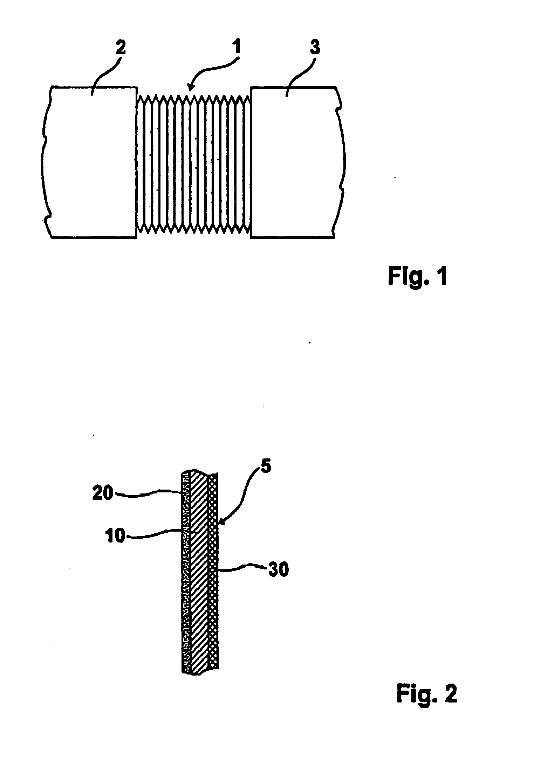

Zwischen den beiden Wagenkästen 2, 3 eines Gelenkfahrzeugs befindet sich der Balg 1 des Übergangs, wobei der Balg als Falten- oder Wellenbalg ausgebildet sein kann (Fig. 1). Gegenstand der Erfindung ist die Materialbahn 5 für die Herstellung eines Balges.

Der mindestens eine Festigkeitsträger 10 der Materialbahn 5 wird auf der einen Seite mit einem Kautschuk auf Silikonbasis 30 beschichtet, wobei nach der Beschichtung des Festigkeitsträgers, beispielsweise einem Gewebe, einem Gewirk oder einem Gelege, diese Schicht auf Basis des Silikonkautschuks ausvulkanisiert wird. Nach diesem Vorgang der Ausvulkanisation wird die andere Seite des Festigkeitsträgers mit einem organischen Kautschuk, also beispielsweise einem CSM, beschichtet, um dann nachfolgend diese Schicht 20 auszuvulkanisieren.

## Patentansprüche

1. Balg eines Übergangs zwischen zwei gelenkig miteinander verbundenen Fahrzeugen oder Balg einer Fluggastbrücke oder Fluggasttreppe, wobei der Balg mindestens eine Materialbahn mit mindestens einem Festigkeitsträger aufweist, wobei der Festigkeitsträger beidseitig mit einer Kunststoffschicht beschichtet ist,
**dadurch gekennzeichnet,**
**dass** der mindestens eine Festigkeitsträger (10) auf der einen Seite eine Beschichtung (30) auf Basis eines Silikonkautschuks und auf der anderen Seite eine Beschichtung (20) auf Basis eines organischen Kautschuks aufweist.

2. Balg nach Anspruch 1,
**dadurch gekennzeichnet,**
**dass** die Beschichtung (30) auf Basis eines Silikonkautschuks auf der Außenseite des Balges und die Beschichtung (20) auf Basis eines organischen Kautschuks auf der Innenseite des Balges angeordnet ist.

3. Balg nach Anspruch 1 oder 2,
**dadurch gekennzeichnet,**
**dass** der Festigkeitsträger (10) ein Gewebe, Gewirk, Gelege oder Gestrick ist.

4. Balg nach einem der Ansprüche 1 bis 3,
**dadurch gekennzeichnet,**
**dass** der organische Elastomerwerkstoff ein CSM ist.

5. Balg nach einem der voranstehenden Ansprüche
**dadurch gekennzeichnet,**
**dass** nach Aufbringen der Beschichtung (30) auf Basis eines Silikonkautschuks auf der einen Seite des Festigkeitsträgers (10) die Kautschukschicht auf dem mindestens einen Festigkeitsträger ausvulkanisiert wird, wobei nach der Ausvulkanisation des Silikonkautschuks die Beschichtung (20) auf Basis eines organischen Kautschuks auf die freie Seite des mindestens einen Festigkeitsträgers aufgebracht wird, und die Beschichtung (20) auf Basis des organischen Kautschuks auf dem mindestens einen Festigkeitsträger (10) nachfolgend ausvulkanisiert wird.

## Claims

1. A bellows of a gangway between two vehicles articulately connected to each other or bellows of an air passenger bridge or air passenger stair, the bellows comprising at least one material web with at least one reinforcement layer, wherein the reinforcement layer is coated on both sides with a plastic layer,
**characterized in that**
the at least one reinforcement layer (10) comprising on the one side a coating (30) based on a silicone rubber and on the other side a coating (20) based on an organic rubber.

2. The bellows according to claim 1,
**characterized in that**
the coating (30) based on a silicone rubber is disposed on the outside of the bellows and the coating (20) based on an organic rubber is disposed on the inside of the bellows.

3. The bellows according to claim 1 or 2,
**characterized in that**
the reinforcement layer (10) is a woven fabric, a warp-knitted fabric, a non-crimp fabric or a weft-knitted fabric.

4. The bellows according to one of the claims 1 to 3,
**characterized in that**
the organic elastomer material is a CSM.

5. The bellows according to one of the afore-mentioned claims,
**characterized in that**
after applying the coating (30) based on a silicone rubber onto the one side of the reinforcement layer (10), the rubber layer is completely vulcanized on the at least one reinforcement layer, wherein after complete vulcanization of the silicone rubber, the coating (20) based on an organic rubber is applied onto the free side of the at least one reinforcement layer and the coating (20) based on the organic rubber is subsequently completely vulcanized on the at least one reinforcement layer (10).

## Revendications

1. Soufflet d'une intercirculation entre deux véhicules reliés ensemble de manière articulée ou soufflet d'une passerelle d'embarquement ou d'un escalier d'embarquement, le soufflet comprenant au moins une bande de matériau avec au moins un renfort, le renfort étant revêtu des deux côtés d'une couche de matière plastique,
**caractérisé en ce que**
l'au moins un renfort (10) comporte sur un côté un revêtement (30) à base d'un caoutchouc de silicone et sur l'autre côté un revêtement (20) à base d'un caoutchouc organique.

2. Soufflet selon la revendication 1,
**caractérisé en ce que**
le revêtement (30) à base d'un caoutchouc de silicone est disposé sur le côté extérieur du soufflet et le revêtement (20) à base d'un caoutchouc organique est disposé sur le côté intérieur du soufflet.

3. Soufflet selon les revendications 1 ou 2,
**caractérisé en ce que**
le renfort (10) est un textile tissé, un tricot en trame, un textile non tissé ou un tricot en chaîne.

4. Soufflet selon l'une des revendications 1 à 3,
**caractérisé en ce que**
le matériau élastomère organique est un polyéthylène chloro-sulfoné.

5. Soufflet selon l'une quelconque des revendications précédentes,
**caractérisé en ce que**
après l'application du revêtement (30) à base d'un caoutchouc de silicone sur un côté du renfort (10), la couche de caoutchouc est complètement vulcanisée sur l'au moins un renfort, le revêtement (20) à base d'un caoutchouc organique étant appliquée sur le côté libre de l'au moins un renfort après la vulcanisation complète du caoutchouc de silicone, et le revêtement (20) à base du caoutchouc organique étant ensuite complètement vulcanisé sur l'au moins un renfort (10).
